# EUROPEAN PATENT APPLICATION

(11) **EP 1 840 100 A2**
(43) Date of publication of application: **03.10.2007**
(21) Application number: 07104787.2
(22) Date of filing: 23.03.2007
(51) Int. Cl.: C04B 33/13, C04B 33/14

(54) **Process for the production of end-products using mud based on inert materials coming from quarries**

(30) Priority: 27.03.2006 IT MI20060564
(71) Applicant: Tonarelli S.p.A., 55020 Diecimo - Borgo a Mozzano (IT)
(72) Inventor: Tonarelli, Beniamino, 55020 DIECIMO - BORGO A MOZZANO (Lucca) (IT); Basili, Simone, 55023 BORGO A MOZZANO (Lucca) (IT)
(74) Representative: Coppo, Alessandro

(57) **Abstract**

The present invention relates to a process for the production of end-products which comprises, as starting materials, the use of mud coming from crushing and washing plants of inert materials of quarries and the baking of said mud at a temperature selected within the range of 1,050 to 1,350°C.

## Description

The present invention relates to a process for the production of end-products using mud based on inert materials from quarries.

In particular, the present invention relates to a process for the production of brick-like products which, as starting material, uses mud coming from crushing and washing plants of inert materials or lithoid aggregates of quarries.

The exploitation of quarries of inert materials, those for crushed stones and mixed granular materials, is characterized, in addition to their origin and deposit conditions, by a limited marketability range due to the relative low value of the material.

In the field of extraction activities, the possibility of exploiting all types of extractable material and possibly debris has a particularly important role.

As is known, excavations in quarries are effected with common earth movement means such as excavators, mines, mechanical blades and with the help of mechanical devices such as pneumatic and non-pneumatic drills. The inert material extracted is transported with trucks to the treatment plant where they are then treated following pulverization, washing, classification cycles as far as the production of end-products.

The material collected in quarries consists of earth and rocks and generally consists of: various kinds of rocks with varying chemical compositions (calcareous, silicic, magnesic, ...); earth; clays; silt; organic impurities. This material is sent to the crushing and sieving process to obtain: sand; gravel; crushed stone; construction material; stabilized materials.

The material which is not treated is generally considered either a material for less qualified uses, or an actual by-product.

The residual material called mud is eliminated by means of a washing process with water which separates the silt and clays from the materials with a larger particle-size. This mud is based on inert materials coming from the crushing of the inert materials and clarification or decanting of the washing water of the inert products and forms quarry processing by-products.

The mud essentially consists of silt and clays and can be sedimented, for example in lagooning tank, or flocculated and then filter-pressed. The particles based on inert materials which form said mud typically have a particle-size lower than 100 microns, measured with the use of mesh.

As of today, this mud not only has not found a use but must even be disposed of in suitable dumps with significant economical expenses for the running of the quarry.

Mud is in fact classified, according to the European and Italian regulation (Dlgs 22/97), as a waste product and as such must be used for example in the following activities:
- as additives in the production of cement;
- in the brick industry as additives to be added in minimum quantities to the paste and in the expanded clay industry;
- as inert fillers in the preparation of mixtures and conglomerates destined for environmental reclamation.

In all these applications, however, a minimum presence of mud is required and consequently most of it is sent for disposal.

The necessity is therefore felt in the present state for availing of a method which allows a use of this mud produced in the processing plants of inert materials in quarries.

One of the objectives of the present invention therefore consists in providing a process which allows a by-product of quarry processing to be used for the production of end-products.

A further objective of the present invention is to provide a process which allows the use of mud coming from quarry crushing plants of inert materials or from the washing of inert products as starting material for producing bricks.

Another objective of the invention consists in providing a process which improves the economical returns of the exploitation of quarries using materials typically destined for disposal such as mud consisting of inert materials.

The Applicant has now surprisingly found that the mud based on inert materials described above can be used for the production of various types of end-products by subjecting said mud to thermal treatment at a particular high temperature and selected from 1,050 to 1,350°C.

In view of the objectives indicated above, a first aspect of the present invention relates to the use of mud based on inert materials for the production of end-products comprising the baking of said mud at a temperature ranging from 1,050 to 1,350°C. It has been observed that most of the most significant physicochemical reactions are concentrated in a narrower temperature range, ranging from 1,100°C-1,250°C, such as:
- elimination of the water absorbed;
- elimination of the crystallization and interstitial water;
- crystallization and neoformation of crystals starting from the argillaceous materials present;
- decarbonation of the carbonates;
- neoformation and crystallization reactions between silica and Calcium oxide with the formation of wollastonate and similar products;
- sintering and/or complete melting of the crystalline and amorphous mass.

Thermal treatment within the temperature range selected allows the production of an end-product with a mechanical resistance analogous to or higher than that of similar end-products obtained for example in the brick industry starting from clays as raw material.

By varying the temperature range, materials are obtained with a different resistance and porosity and therefore with a different water absorption degree.

With an increase in temperature, the crystallization characteristics of the baked product vary, passing from a product similar to brick for temperatures in the lower part of the range, until obtaining a product of the glass-ceramic type when the higher part of the temperature range is reached.

The mud based on inert materials is conveniently subjected to drying before baking.

According to another aspect of the invention, a product or end-product is provided which can be obtained with the process as described above.

The porosity of the end-products obtained with the method of the invention can be modulated by varying the composition of calcium carbonate in the starting mud and/or by varying the baking temperature: it has been observed that even modest oscillations in temperature, within the range selected, can induce significant structural modifications passing from completely impermeable materials to materials with an extremely high water absorption, enabling them to also be used as filtering and/or draining materials.

With high percentages of calcium carbonate/calcium oxide and baking temperatures in the low part of the range, for example, end-products are obtained which absorb water like a "sponge", which can also be used for the production of filter panels of a physical nature in which the porosity can be modulated by simply varying the particle-size of the mud to be sent for baking.

If higher temperatures are reached, on the contrary, melting takes place with the formation of an essentially non-porous material, until calcic glass is obtained.

The Applicant has also found that end-products of various types and forms can be obtained depending on whether they are subjected to a treatment phase selected from extrusion, moulding, modeling or granulation before or contemporaneously with the thermal treatment.

Depending on whether the baking is combined with an extrusion or moulding or granulation phase, the process of the invention therefore allows numerous products and end-products to be obtained, among which:
- bricks such as filled bricks having various geometries and forms, perforated bricks having various geometries and forms, tiles, hollow flat tiles;
- products of the ceramic type such as various types of tiles, sanitary fixtures such as washbasins, bathtubs, and the like;
- various end-products such as kerbs, mizzens, work planes, vases, vase-holders, furnishing items, outside furniture, decorations, furnishings, insulating materials, sound absorbers, filter panels, lining sheets, prefabricated panels for civil and industrial construction, tanks for liquids, inspection wells, pipes, self-blocking products, construction ashlars having various forms and sizes, thresholds, refractory panels, steps;
- special glass-ceramic type products such as transparent calcic glass in the visible and/or slightly coloured light spectrum if ferric salts (green colour), and salts of other metals are present in the starting mud;
- inert products with a reduced particle-size, such as sand, gravel, crushed stone, construction materials or products for being introduced into crushing cycles, consoles, shelves, urban furnishing items, undulated sheets.

The process according to the present invention is typically applied in the treatment of mud based on inert materials, deriving from crushing and washing plants of inert materials and comprising:
- calcium carbonate, preferably in a quantity ranging from 20-95% by dry weight, more preferably between 40-90% by dry weight,
- silica/silicic materials preferably in a quantity ranging from 6-50% by dry weight,
- earth/clays preferably in a quantity lower than 50% by dry weight.

Minority components can also be present in the mud with the maximum limit of 10% by dry weight.

According to an embodiment of the invention, the composition of the mud obtained from the washing processes of inert materials can be modified in the percentages of the single chemical components, both by introducing specific additives based for example on salts/calcium oxides and silicates and by homogenization with mud having a different chemical composition, also coming from the same production cycle, but produced at different times. Substances suitable for modifying the colour such as for example inorganic metallic colouring salts can also be added to the mud.

If the material fed to the baking phase has a suitable particle-size, sand or crushed stone is directly obtained at the end of the process, otherwise subsequent crushing and sieving must be effected to obtain all the typical particle-sizes of production plants of inert materials (sands, crushed stones, gravel, etc.).

According to an embodiment, the process of the invention can be used for obtaining inert products which are or are not re-fed to the crushing plant to obtain sand, gravel, crushed stone and similar products.

The process of the invention allows completely different products to be obtained with respect to those produced using mud as such. By using the mud of inert materials as such in the brick industry, for example, end-products are obtained with an extremely low mechanical and chemical resistance; whereas if said mud is used as such in the ceramic industry end-products are obtained with inert inclusions and basic leaching eluates and poor mechanical properties which jeopardize its use.

The following examples are provided for purely illustrative purposes of the present invention and should not be considered as limiting its protection scope, as resulting from the enclosed claims.

### EXAMPLE 1

Process for the production of end-products from mud based on inert materials coming from quarries.

The raw material consisted of a filter-pressed mud coming from washing operations of inert materials of a purely calcareous quarry.

The residual humidity proved to be equal to 20% by weight. The chemical composition was the following:

| | |
|---|---|
| Calcium carbonate | 70% by wt on the dry product |
| Silica: | 15% by wt on the dry product |
| Earth and clays | 10% by wt on the dry product |
| Minority minerals | <5% |

The mud which was still wet was inserted in a hopper which feeds a worm screw, having a diameter of 120 mm and a length equal to 1,000 mm, fed by means of a 0.75 KW electric motor with a motor-reducer and inverter in order to modulate the rotation rate.

Once homogenized, the product fell into a subsequent hopper which fed a second worm screw having the same dimensions and mechanical-electrical characteristics as the previous one.

An interchangeable aluminum draw-plate was inserted at the head of the worm screw to allow extrusion to be effected in various forms. In particular, a draw-plate with a square section (dimensions of 45 x 45 mm) was used, obtaining an end-product having a parallelepiped form, which is cut manually (nylon thread) to obtain cubic objects (45 x 45 x 45 mm). The end-products thus obtained were dried in air (room temperature) for 36 hours, to allow them to be handled and were then introduced into a drying oven at a temperature of 120°C for 24 hours.

At the end of the drying process, the materials were transferred to a high temperature oven where a temperature of 1,225°C was reached with suitable temperature ramps.

When the temperature had been reached, the materials were left to cool to room temperature.

### EXAMPLE 2

The following mechanical tests were effected on the end-products of Example 1:
- compression tests
- water absorption tests.

The following results were obtained:

| number | baking T°C | resistance Kg/cm2 | absorption (% by weight) |
|---|---|---|---|
| 1 | 1050 | 140 | 18 |
| 2 | 1225 | 400 | 20 |
| 3 | 1350 | 120 | <1 |

## Claims

1. Use of mud based on inert materials coming from the processing or washing of inert materials in quarries, for the production of an end-product comprising the baking of said mud at a temperature ranging from 1,050 to 1,350°C.

2. Use according to claim 1, **characterized in that** the baking is effected at a temperature ranging from 1,100 to 1,250°C.

3. Use according to claim 1 or 2, **characterized in that** said mud based on inert materials comprises calcium carbonate, silica, earth and/or clays.

4. Use according to claim 3, **characterized in that** said calcium carbonate is present in a quantity ranging from 40-90% by dry weight, said silica is present in a quantity ranging from 6-50% by dry weight, said earth and/or clays are present in a quantity lower than 50% by dry weight.

5. Use according to any of the claims 1-4, **characterized in that** said mud based on inert materials is subjected to a treatment phase selected from extrusion, moulding, modeling, granulation before the baking phase.

6. Use according to claim 5, **characterized in that** following said treatment phase, the end-product obtained is subjected to drying before being sent for baking.

7. Use according to any of the claims 1-6, **characterized in that** the particles forming said mud based on inert materials have a particle-size lower than 100 microns.

8. Use according to any of the claims 1-7, **characterized in that** one or more additives selected from salts or calcium oxides, silicates, mud coming from the same or another production cycle are added to said mud based on inert materials.

9. Use according to any of the claims 1-8, **characterized in that** one or more colouring substances, preferably inorganic metallic colouring salts, are added to said mud based on inert materials.

10. Use according to any of the claims 1-9, **characterized in that** the particles based on inert materials which form said mud have a particle-size lower than 100 microns.

11. Use according to any of the claims 1-10, **characterized in that** said end-product comprises, bricks, end-products of the ceramic-type, or glass-ceramic type.

12. A process for the production of an end-product comprising the baking of mud based on inert materials coming from the processing or washing of inert materials in quarries at a temperature ranging from 1,050 to 1,350°C.

13. The process according to claim 12, **characterized in that** it comprises a treatment phase of said mud selected from extrusion, moulding, modeling, granulation and baking of the end-product resulting from said treatment phase at a temperature ranging from 1,050 to 1,350°C.

14. The process according to claim 13, **characterized in that** it comprises drying phase of the end-product treated before baking.

15. The process according to any of the claims 11-14, **characterized in that** said treatment phase comprises the feeding of said mud based on inert materials to at least one hopper, extrusion of the end-product and baking.

16. An end-product obtained by means of a process according to any of claims 11-15.

17. The end-product according to claim 16, **characterized in that** it is a brick.
